# EUROPEAN PATENT SPECIFICATION

(11) **EP 3 437 818 B1**
(45) Date of publication and mention of the grant of the patent: **19.04.2023**
(21) Application number: 17773892.9
(22) Date of filing: 23.02.2017
(51) Int. Cl.: B29C 39/28, B29C 39/10, A47C 27/14, B29C 39/24, B29C 39/26, B60N 2/90, B29C 44/08, B29C 44/12, B29K 75/00, B29K 105/04, B29L 31/58

(54) **IN-MOLD FOAMED MOLDING, FOAMED COMPOSITE MOLDING, METHOD FOR MANUFACTURING FOAMED COMPOSITE MOLDING, AND USE OF A MOLD**
FORMGESCHÄUMTER FORMKÖRPER, GESCHÄUMTER VERBUNDFORMKÖRPER, VERFAHREN ZUR HERSTELLUNG EINES GESCHÄUMTEN VERBUNDFORMKÖRPERS UND VERWENDUNG VON FORMWERKZEUG
MOULAGE EXPANSÉ DANS LE MOULE, MOULAGE COMPOSITE EXPANSÉ, PROCÉDÉ DE FABRICATION DE MOULAGE COMPOSITE EXPANSÉ, ET USAGE D'UN MOULE

(30) Priority: 29.03.2016 JP 2016066700
(43) Date of publication of application: 06.02.2019
(73) Proprietor: Kaneka Corporation, Osaka-shi, Osaka 530-8288 (JP)
(72) Inventor: TOBIMATSU, Yuki, Settsu-shi Osaka 566-0072 (JP); SAMESHIMA, Masahiko, Settsu-shi Osaka 566-0072 (JP)
(74) Representative: Vossius & Partner Patentanwälte Rechtsanwälte mbB
(86) International application number: PCT/JP2017/006737
(87) International publication number: WO 2017/169347

(56) References cited:
- WO-A1-98/05232
- WO-A1-2004/052628
- GB-A- 2 219 964
- JP-A- H0 716 954
- JP-A- H05 329 849
- JP-A- 2005 081 574
- JP-A- 2006 068 913
- JP-A- 2007 331 277
- JP-A- 2014 128 890
- JP-B2- 3 485 142
- JP-U- S 595 325
- JP-Y2- H0 453 685

## Description

### Technical Field

The present invention relates to: an in-mold foamed molded product obtained by expanding and molding olefin resin-containing expanded particles in a mold; a foamed composite molded product in which an in-mold foamed molded product and an urethane foam are integrally molded; a method of producing a foamed composite molded product; and a mold for integrally molding a polyurethane foam with an in-mold foamed molded product.

### Background Art

Conventionally, it was common practice to mold vehicle seats for an automobile and other vehicles by integrally molding a seat core material, such as a metal wire, and a polyurethane foam. However, for weight and cost reductions, a combination of the metal wire and the polyurethane foam has recently been replaced in part with an in-mold foamed molded product. This is because the in-mold foamed molded product is lighter than the metal wire and the polyurethane foam.

An in-mold foamed molded product is produced by expanding and molding expanded polyolefin resin particles in a mold. The in-mold foamed molded product is placed in a polyurethane foam-molding mold and is then integrally molded with a polyurethane foam which has been obtained through expansion and molding of a polyurethane liquid, so that a foamed composite molded product is molded. The foamed composite molded product is covered with a seat cover so as to be used as a vehicle seat for an automobile or other vehicle.

Here, the polyurethane liquid and the polyurethane foam may enter a gap which is formed between the in-mold foamed molded product and the polyurethane foam-molding mold when the in-mold foamed molded product is placed in the polyurethane foam-molding mold. This can be caused by the occurrence(s) of a sink and/or a warp on the in-mold foamed molded product, misalignment of the in-mold foamed molded product during positioning of the in-mold foamed molded product at the placement of the in-mold foamed molded product in the polyurethane foam-molding mold, or shrinkage of an in-mold foamed molded product by heat. Note that the sink and/or the warp which occur(s) on the in-mold foamed molded product may occur more significantly, for example, during integral molding of the in-mold foamed molded product and the metal wire (insert material). This is because there is a difference in shrinkage ratio between the in-mold foamed molded product and the metal wire.

Consequently, the polyurethane foam is molded in the gap between a contact surface of the in-mold foamed molded product, which surface contacts the polyurethane foam-molding mold, and the polyurethane foam-molding mold. This leads to the problem of the difficulty in attaching the foamed composite molded product to a vehicle body or the problem of the need to remove the polyurethane foam present in between the foamed composite molded product and the vehicle body.

Patent Literatures 1 and 2 each disclose the technique of preventing a polyurethane liquid or a polyurethane foam from entering a vehicle body attachment surface of a seat core material.

A resin molded product disclosed in Patent Literature 1 has many engaging elements on the surface of the substrate and includes longitudinally continuous sealing protrusions on the both widthwise ends of the surface of the substrate. The resin molded product is produced by attaching the sealing protrusions to the mold so as to be joined with the shoulder of a recessed part of the mold, introducing a resin (polyurethane liquid) into the mold, and then curing the resin.

For the resin molded product disclosed in Patent Literature 1, according to the above configuration, the sealing protrusions prevent leakage of a resin toward the engaging elements side during introduction of the resin into the mold.

A composite sheet disclosed in Patent Literature 2 includes a first nonwoven fabric layer, a second nonwoven fabric layer, and a film material having ductility. The film material is disposed between the first nonwoven fabric layer and the second nonwoven fabric layer to obtain the laminate, and the laminate is then needle-punched so that the first nonwoven fabric layer, the second nonwoven fabric layer, and the film material are integrated into one piece.

For the composite sheet disclosed in Patent Literature 2, according to the above configuration, mechanical interlacement through the needle-punching is used to integrate the first nonwoven fabric layer, the second nonwoven fabric layer, and the film material into one piece. This forms many holes on the film material. However, due to the presence of the unwoven fabric layers on the both sides of the film material, in the process of integrally molding the film material with urethane foam, an urethane foaming undiluted liquid having passed through the film material via one of the nonwoven fabric layers and the holes formed on the film material is absorbed by another one of the nonwoven fabric layers. This makes it possible to prevent the urethane foaming undiluted liquid from exuding to the surface of the another one of the nonwoven fabric layers.

### Citation List

### [Patent Literature]

[Patent Literature 1]
   Japanese Patent Application Publication Tokukai No. 2009-78555 (April 16, 2009)
[Patent Literature 2]
   Japanese Patent Application Publication Tokukai No. 2008-44160 (February 28, 2008)

### Summary of Invention

### Technical Problem

Unfortunately, the techniques disclosed in Patent Literatures 1 and 2, although having the function of preventing the polyurethane liquid or the polyurethane foam from entering the vehicle body attachment surface of the seat core material, fail to have the function of preventing the polyurethane liquid and the polyurethane foam from entering a gap between the contact surface of the in-mold foamed molded product and the polyurethane foam-molding mold, which gap results from, for example, a sink and/or a warp that occur(s) on the in-mold foamed molded product. Thus, the techniques disclosed in Patent Literatures 1 and 2 cannot solve the above problem. WO 98/05232 A1 and JP H05 329849 A disclose inserts blocking the exit or entry of foam material during molding.

The present invention has been made in view of the above problem, and it is an object of the present invention to provide an in-mold foamed molded product which prevents molding of a polyurethane foam in an unintended area so that a foamed composite molded product can easily and efficiently be attached to a vehicle body.

### Solution to Problem

In order to solve the above problem, an in-mold foamed molded product of the present invention is an in-mold foamed molded product according to claim 1.

A method of producing a foamed composite molded product of the present invention according to claim 8.

Use of a mold for integrally molding a polyurethane foam with an olefin resin-containing in-mold foamed molded product according to claim 11.

### Advantageous Effects of Invention

The present invention yields the effect of preventing molding of a polyurethane foam in an unintended area so that a foamed composite molded product can easily and efficiently be attached to a vehicle body.

### Brief Description of Drawings

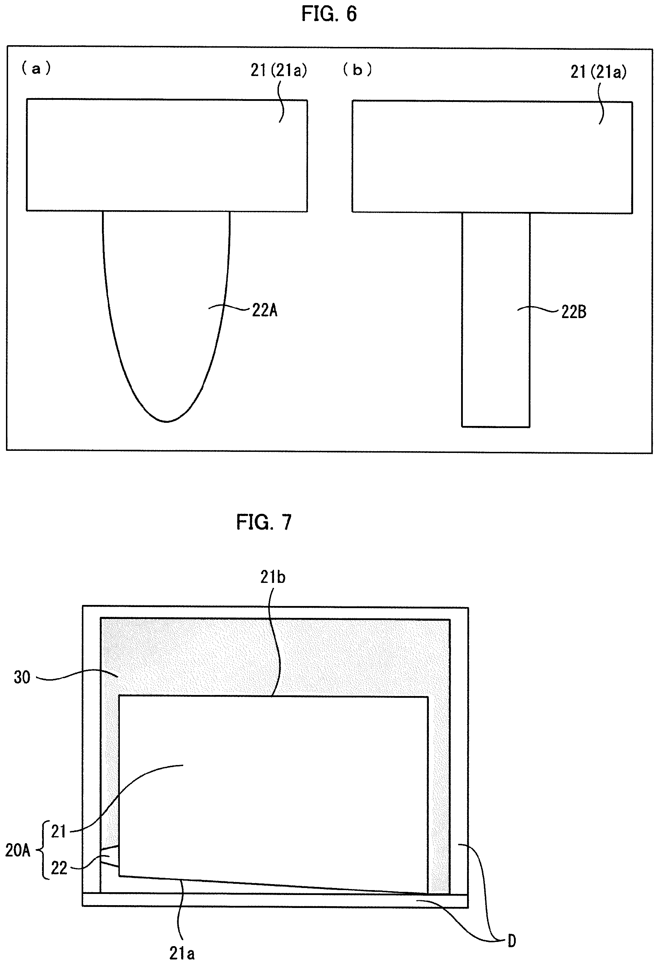

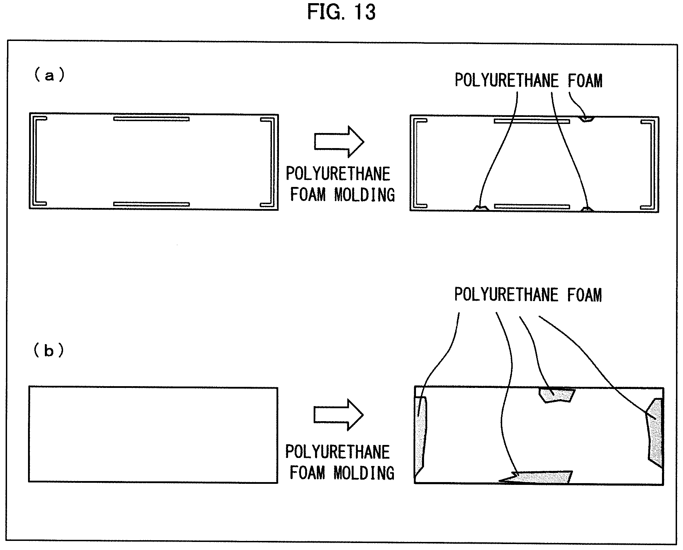

Fig. 1 is a cross-sectional view illustrating the structure of a foamed composite molded product in accordance with Embodiment 1 of the present invention.
Fig. 2 is a view of the in-mold foamed molded product in accordance with Embodiment 1 of the present invention when viewed from a contact surface side.
Fig. 3 is a cross-sectional view illustrating the in-mold foamed molded product taken along the line A-A in Fig. 2.
Fig. 4 is a view illustrating the shape of a sealing protrusion of the in-mold foamed molded product in accordance with Embodiment 1 of the present invention and is an enlarged view of a part indicated by B in Fig. 3.
(a) of Fig. 5 is a cross-sectional view illustrating a method of molding the conventional foamed composite molded product, and (b) of Fig. 5 is a cross-sectional view illustrating a method of molding the foamed composite molded product in accordance with Embodiment 1 of the present invention.
(a) and (b) of Fig. 6 are views illustrating the shapes of sealing protrusions, as variations, of the in-mold foamed molded product in accordance with Embodiment 1 of the present invention and illustrating cross sections obtained by cutting the sealing protrusions along planes perpendicular to the contact surfaces.
Fig. 7 is a view illustrating an in-mold foamed molded product as a variation of the in-mold foamed molded product in accordance with Embodiment 1 and is a cross-sectional view illustrating the in-mold foamed molded product which has been integrally molded with a polyurethane foam in the polyurethane foam-molding mold.

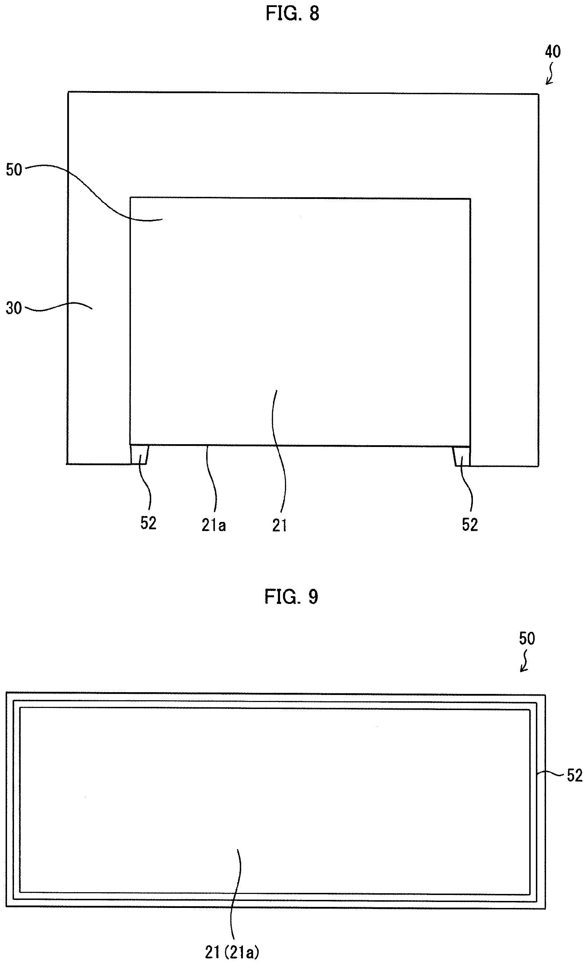

Fig. 8 is a cross-sectional view illustrating the structure of a foamed composite molded product in accordance with Embodiment 2 of the present invention.
Fig. 9 is a view of the in-mold foamed molded product in accordance with Embodiment 2 of the present invention when viewed from a contact surface side.

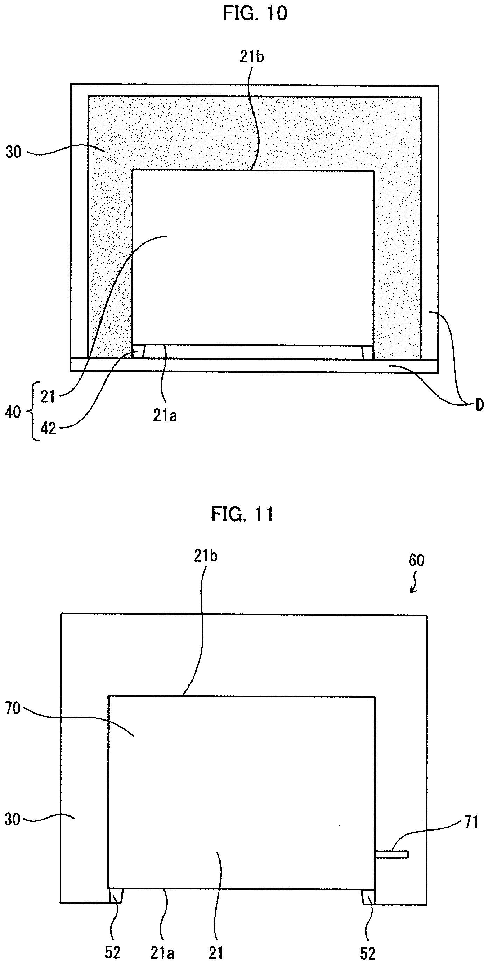

Fig. 10 is a cross-sectional view illustrating a method of molding the foamed composite molded product in accordance with Embodiment 2 of the present invention.
Fig. 11 is a cross-sectional view illustrating the structure of a foamed composite molded product in accordance with Embodiment 3 of the present invention.

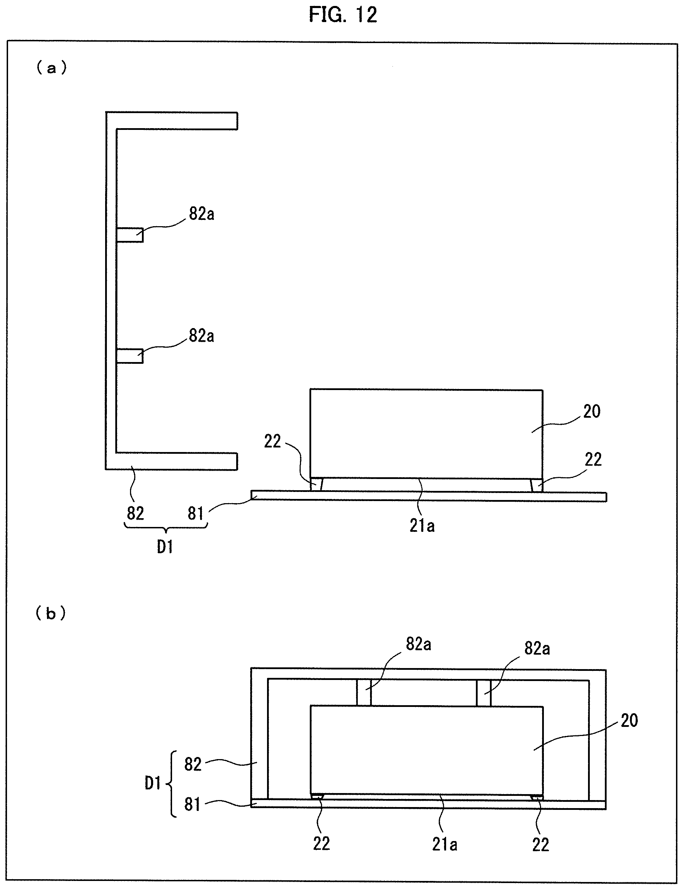

Fig. 12 is a view illustrating the step of closing a polyurethane foam-molding mold in accordance with Embodiment 4 of the present embodiment, wherein (a) of Fig. 12 is a cross-sectional view illustrating a state before the polyurethane foam-molding mold is closed, and (b) of Fig. 12 is a cross-sectional view illustrating a state after the polyurethane foam-molding mold has been closed.
(a) of Fig. 13 is a view, when the in-mold foamed molded product in Example 1 is viewed from a contact surface side, illustrating the presence or absence of entry of the polyurethane foam during molding of the foamed composite molded product with use of the in-mold foamed molded product in Example 1, and (b) of Fig. 13 is a view, when the in-mold foamed molded product in Comparative Example 2 is viewed from the contact surface side, illustrating the presence or absence of entry of the polyurethane foam during molding of the foamed composite molded product with use of the in-mold foamed molded product in Comparative Example 2.

### Description of Embodiments

The following will describe embodiments of the present invention in detail.

### [Embodiment 1]

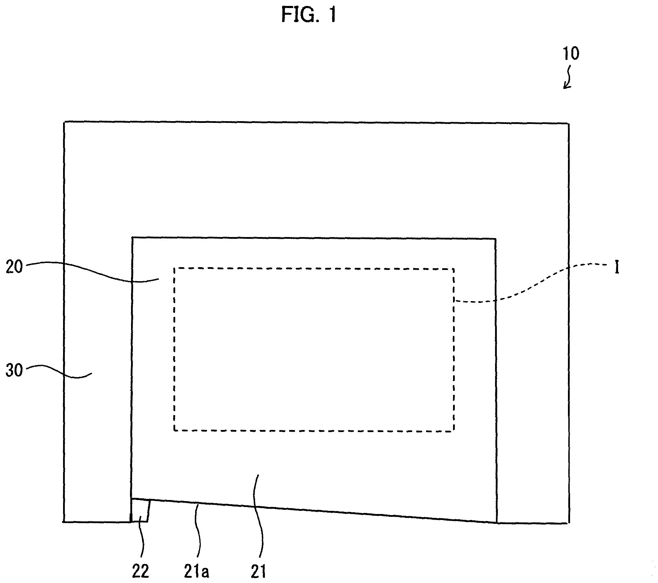

The following will describe an in-mold foamed molded product 20 and a foamed composite molded product 10 in accordance with the present embodiment with reference to Figs. 1 to 6. Fig. 1 is a cross-sectional view illustrating the structure of the foamed composite molded product 10 in accordance with the present embodiment.

As illustrated in Fig. 1, the foamed composite molded product 10 is a molded product in which the in-mold foamed molded product 20 and a polyurethane foam 30 are integrally molded.

### (In-mold foamed molded product 20)

The in-mold foamed molded product 20 is an in-mold foamed molded product made up of olefin resin-containing expanded particles. The in-mold foamed molded product 20 is, for example, an in-mold foamed molded product made up of polyolefin-based resin expanded particles.

A base material resin constituting olefin resin-containing expanded particles in the present embodiment can be any base material resin that contains at least olefin resin. However, from the viewpoint of strength, impact resistance, and heat resistance, the base material resin is preferably a polyolefin resin or a composite resin that contains a polyolefin resin and a polystyrene resin, and is most preferably a polyolefin resin. Further, in a case where the base material resin is a polyolefin resin, the polyolefin resin is easy to recycle.

Examples of the polyolefin resin include, but not limited to, a polypropylene resin and polyethylene resin. Examples of the polypropylene resin include a propylene homopolymer, an ethylene/propylene copolymer, and an ethylene/propylene/ 1-butene copolymer. Examples of the polyethylene resin include an ethylene homopolymer, a high-density polyethylene resin, a medium-density polyethylene resin, a low-density polyethylene resin, a linear low-density polyethylene resin, and more specifically include an ethylene/1-butene copolymer, and an ethylene/4-methyl-1-pentene copolymer. Note that the copolymer may be a random copolymer or may be a block copolymer.

A method of producing expanded particles is not limited to a particular method and can be, for example, a conventionally well-known production method. Examples of a method of producing polyolefin-based resin expanded particles include, but not limited to, the production method disclosed in International Patent Publication No. WO2009/075208 and the production method disclosed in Japanese Patent Application Publication Tokukai No. 2006-117842. Examples of a method of producing a composite resin that contains a polyolefin resin and a polystyrene resin include, but not limited to, the production method disclosed in Japanese Patent Application Publication Tokukai No. 2008-239794 and the production method disclosed in International Patent Publication No. WO2016/152243.

The expanded particles thus obtained can contain or be coated with an additive such as a flame retardant, an antistatic agent, and a coloring agent as necessary by a conventionally well-known method. A particle size of the expanded particles is not limited to a particular particle size and can be, for example, 1 mm to 10 mm. However, from the viewpoint of the ease with which the expanded particles are filled in a mold apparatus for in-mold foam molding, the particle size of the expanded particles is preferably 1 mm to 5 mm, and more preferably 1 mm to 3 mm.

An expansion ratio of the expanded particles is not limited to a particular expansion ratio, and can be, for example, three times to 90 times. However, from the viewpoint of mechanical strength or moldability, the expansion ratio is five times to 60 times, and more preferably five times to 45 times. Such expanded particles are sold under trade names such as EPERAN-PP and EPERAN-XL (both of which are available from KANEKA CORPORATION) and are easily available.

Further, the olefin resin-containing expanded particles used in the present invention preferably have heat resistance to endure a molding temperature of a polyurethane foam at the time of integrally molding an in-mold foamed molded product and the polyurethane foam (i.e., the olefin resin-containing expanded particles preferably have a high melting point or a high softening temperature). However, molding the expanded particles having a high melting point or a high softening temperature requires a high saturated steam pressure and a special molding machine that withstands a high saturated steam pressure. This increases the production cost. Thus, the melting point or softening temperature of the olefin resin-containing expanded particles used in the present invention is preferably not lower than 110°C and not higher than 160°C, more preferably not lower than 115°C and not higher than 160°C, and most preferably not lower than 130°C and not higher than 150°C. Note that the softening temperature in the present invention means a Vicat softening point. The Vicat softening point is one of the indices that indicate heat resistance of a resin. The Vicat softening point of the olefin resin-containing expanded particles refers to a Vicat softening point which is measured in accordance with the method described in JIS K7196 "Testing method for softening temperature of thermoplastic film and sheeting by thermomechanical analysis".

The description in the present embodiment assumes that the in-mold foamed molded product 20 is an in-mold foamed molded product made up of polyolefin-based resin expanded particles. Note that, as described earlier, the in-mold foamed molded product 20 only needs to be an in-mold foamed molded product made up of olefin resin-containing expanded particles and is not necessarily an in-mold foamed molded product made up of polyolefin-based resin expanded particles. Further, the in-mold foamed molded product 20 in an embodiment of the present invention can be obtained by insert molding an insert material I (mainly metal wire) into the in-mold foamed molded product, so that the in-mold foamed molded product 20 can be used as a seat core material of a vehicle seat. Specifically, the in-mold foamed molded product 20 is molded by heating polyolefin-based resin expanded particles with use of a mold apparatus for in-mold foam molding so that the polyolefin-based resin expanded particles are expanded and fused.

The mold apparatus for in-mold foam molding includes: a concave unit having a concave mold and a concave housing for holding the concave mold; and a convex unit having a convex mold and a convex housing for holding the convex mold. By closing the concave mold and the convex mold, a space is formed in between the concave mold and the convex mold. The space is filled with polyolefin-based resin expanded particles. Note that the polyolefin-based resin expanded particles may be polyolefin-based resin expanded particles into which inorganic gas or the like has been impregnated in advance so that the polyolefin-based resin expanded particles have a high internal pressure, or may be polyolefin-based resin expanded particles with atmospheric pressure to which particles no internal pressure has been given. After the space is filled with the polyolefin-based resin expanded particles, saturated steam pressure of about 0.04 to 0.40 MPa (G) is supplied into each of chambers, which are respectively provided in the concave housing and in the convex housing, to heat the polyolefin-based resin expanded particles so that the polyolefin-based resin expanded particles are expanded and fused. This molds the in-mold foamed molded product 20 obtained through in-mold foam molding of the polyolefin-based resin expanded particles.

### <Shape of in-mold foamed molded product 20>

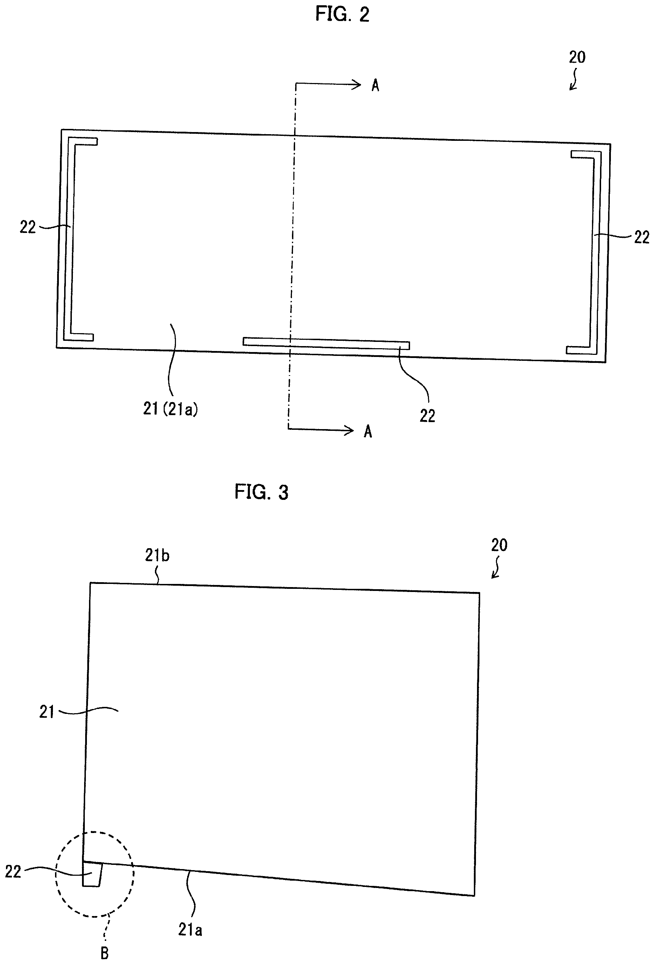

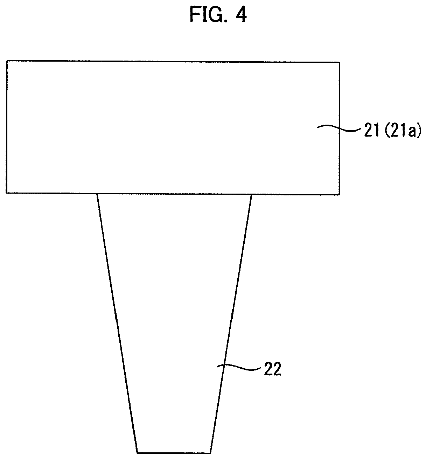

Next, the shape of the in-mold foamed molded product 20 will be described with reference to Figs. 2 to 4. Fig. 2 is a view of the in-mold foamed molded product 20 in accordance with the present embodiment when viewed from a contact surface 21a side. Fig. 3 is a cross-sectional view illustrating the in-mold foamed molded product 20 taken along the line A-A in Fig. 2. Fig. 4 is a view illustrating the shape of a sealing protrusion 22 of the in-mold foamed molded product 20 in accordance with the present embodiment and is an enlarged view of a part indicated by B in Fig. 3.

As illustrated in Figs. 2 and 3, the in-mold foamed molded product 20 in accordance with the present embodiment includes: a base 21 which corresponds to a conventional in-mold foamed molded product; and the sealing protrusion 22. The base 21 and the sealing protrusion 22 are simultaneously molded by heating the polyolefin-based resin expanded particles in a mold apparatus for in-mold foam molding so that the polyolefin-based resin expanded particles are expanded and fused.

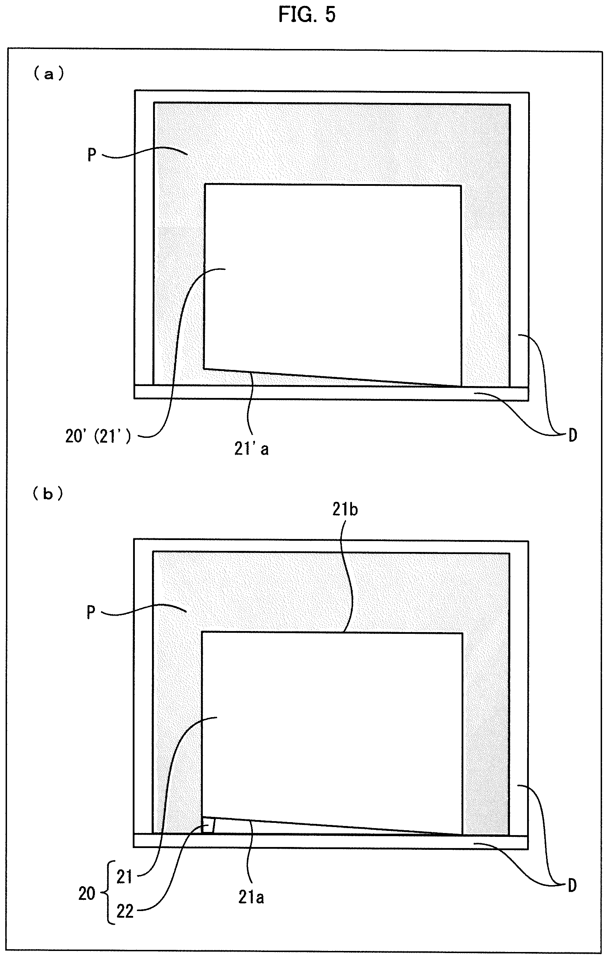

The base 21, which serves as a center of a seat core material of a vehicle seat, constitutes a conventional in-mold foamed molded product. The base 21 has the following surfaces: a contact surface 21a which is to contact a polyurethane foam-molding mold (mold) D (described later) when the in-mold foamed molded product 20 is placed in the polyurethane foam-molding mold D; and a polyurethane foam-forming surface 21b where a polyurethane foam is to be formed (see (b) of Fig. 5).

The sealing protrusion 22 is a projection that protrudes through the contact surface 21a of the base 21. The sealing protrusion 22 in the present embodiment is provided in a part of an outer region of the contact surface 21a, as illustrated in Fig. 2.

Moreover, the sealing protrusion 22 is molded, as illustrated in Fig. 4, such that an area of a cross section perpendicular to a direction in which the sealing protrusion 22 juts out decreases with increasing proximity to a tip of the sealing protrusion 22. Thus, the sealing protrusion 22 is molded such that ease of deformation of the sealing protrusion 22 in response to a pressing force applied upon contact with other object increases with increasing proximity to the tip of the sealing protrusion 22. Consequently, the sealing protrusion 22 can easily become flat when the sealing protrusion 22 interferes with other object. In the present embodiment, the sealing protrusion 22 is trapezoidal in cross section.

Here, conventionally, a sealing protrusion would be molded by, for example, extrusion molding. Unfortunately, this method can mold only a sealing protrusion which is continuous in one direction. In contrast, the in-mold foamed molded product 20 in accordance with the present embodiment is molded with use of a mold apparatus for in-mold foam molding. This allows the sealing protrusion 22 to be molded with any size in any place.

### (Foamed composite molded product 10)

As illustrated in Fig. 1, the foamed composite molded product 10 is a molded product in which the in-mold foamed molded product 20 and the polyurethane foam 30 are integrally molded. The foamed composite molded product 10 is used for a vehicle seat of, for example, an automobile in such a manner that one surface of the foamed composite molded product 10 where the in-mold foamed molded product 20 is exposed (i.e., the contact surface 21a of the base 21 of the in-mold foamed molded product 20) is attached to a vehicle body, and another surface thereof where the polyurethane foam 30 is molded is covered with a seat cover. The following will describe details of a method of molding the foamed composite molded product 10.

### <Method of molding the foamed composite molded product 10>

The method of molding (producing) the foamed composite molded product 10 will be described with reference to Fig. 5. (a) of Fig. 5 is a cross-sectional view illustrating a method of molding the conventional foamed composite molded product, and (b) of Fig. 5 is a cross-sectional view illustrating a method of molding the foamed composite molded product 10 in accordance with the present embodiment. In the cross-sectional view illustrating the method of molding the conventional foamed composite molded product in (a) of Fig. 5, reference numeral 20' is given to an in-mold foamed molded product. Further, the conventional in-mold foamed molded product 20' is assumed to be constituted by only a base 21'.

As illustrated in (a) and (b) of Fig. 5, in the method in which the in-mold foamed molded product and the polyurethane foam 30 are integrally molded to mold a foamed composite molded product, the in-mold foamed molded product is first placed in a polyurethane foam-molding mold D. Next, a polyurethane liquid P, which serves as a raw material for the polyurethane foam 30, is introduced into the polyurethane foam-molding mold D. Subsequently, the polyurethane liquid P is heated to 70°C to 150°C to foam the polyurethane liquid P so that the polyurethane foam 30 is molded. In this manner, the foamed composite molded product in which the in-mold foamed molded product and the polyurethane foam 30 are integrally molded is obtained.

Here, some sinks and/or warps will unfortunately occur on an in-mold foamed molded product produced by in-mold foam molding of olefin resin-containing expanded particles. Thus, as illustrated in (a) of Fig. 5, when the conventional in-mold foamed molded product 20' is placed in the polyurethane foam-molding mold D, a gap is formed in between a contact surface 21'a of the base 21' of the in-mold foamed molded product 20' and the polyurethane foam-molding mold D. This leads to entry of the polyurethane liquid P and the polyurethane foam 30 into the gap. This results in molding of the polyurethane foam 30 in between the contact surface 21'a of the base 21' of the in-mold foamed molded product 20' and the polyurethane foam-molding mold D.

In contrast, for a case where the foamed composite molded product 10 in accordance with the present embodiment is molded, as illustrated in (b) of Fig. 5, the sealing protrusion 22 is provided on the contact surface 21a of the base 21 of the in-mold foamed molded product 20, and the sealing protrusion 22 is provided at a position such that the sealing protrusion 22 comes into contact with the polyurethane foam-molding mold D when the in-mold foamed molded product 20 is placed in the polyurethane foam-molding mold D. With this configuration, it is possible to prevent entry of the polyurethane liquid P and the polyurethane foam 30 into a gap between the contact surface 21a of the base 21 of the in-mold foamed molded product 20 and the polyurethane foam-molding mold D. Consequently, it is possible to prevent the polyurethane foam 30 from being molded in between the contact surface 21a and the polyurethane foam-molding mold D.

Furthermore, the sealing protrusion 22 is formed such that ease of deformation of the sealing protrusion 22 in response to a pressing force applied upon contact with other object increases with increasing proximity to the tip of the sealing protrusion 22. This allows the tip of the sealing protrusion 22 to become flat when the sealing protrusion 22 comes into contact with the polyurethane foam-molding mold D. This consequently allows for better contact between the sealing protrusion 22 and the polyurethane foam-molding mold D. Further, since the sealing protrusion 22 is formed such that ease of deformation of the sealing protrusion 22 in response to a pressing force applied upon contact with other object increases with increasing proximity to the tip of the sealing protrusion 22, the sealing protrusion 22 becomes flat upon contact with a vehicle body when the foamed composite molded product 10 is attached to the vehicle body. Consequently, it is possible to reduce the risk of hampering attachment of the foamed composite molded product 10 to the vehicle body.

As described earlier, the sealing protrusion 22 is molded from a foam and is formed such that ease of deformation of the sealing protrusion 22 in response to a pressing force applied upon contact with other object increases with increasing proximity to the tip of the sealing protrusion 22. Thus, the sealing protrusion 22 has a high degree of flexibility. This allows the sealing protrusion 22 to make excellent contact with the polyurethane foam-molding mold D.

Note that placing the in-mold foamed molded product 20 in the polyurethane foam-molding mold D is followed by a step of closing the polyurethane foam-molding mold D. In the step of closing the polyurethane foam-molding mold D, the sealing protrusion 22 is preferably pressed into contact with the polyurethane foam-molding mold D by pressing the polyurethane foam-molding mold D against the in-mold foamed molded product 20. This allows for more reliable contact between the sealing protrusion 22 and the polyurethane foam-molding mold D.

Note that the in-mold foamed molded product 20 of the present invention is not limited to an in-mold foamed molded product configured such that, when the in-mold foamed molded product is placed in the polyurethane foam-molding mold D, the sealing protrusion 22 comes into contact with the polyurethane foam-molding mold D. That is, the extent of entry of the polyurethane liquid P and the polyurethane foam 30 into a gap between the contact surface 21a of the base 21 of the in-mold foamed molded product 20 and the polyurethane foam-molding mold D varies depending on viscosities and surface tensions of the polyurethane liquid P and the polyurethane foam 30. Thus, the sealing protrusion 22 can be adjusted in length and width as appropriate depending on the extent of the entry. Therefore, depending on viscosities and surface tensions of the polyurethane liquid P and the polyurethane foam, it is possible to prevent entry of the polyurethane liquid P and the polyurethane foam 30 into a gap between the contact surface 21a of the base 21 of the in-mold foamed molded product 20 and the polyurethane foam-molding mold D, without the need for the sealing protrusion 22 to contact the polyurethane foam-molding mold D.

Here, the size of the sealing protrusion 22 will be described. As described earlier, the sealing protrusion 22 is adjusted in size as appropriate depending on the extent of entry of the polyurethane liquid P and the polyurethane foam 30 into a gap between the contact surface 21a of the base 21 of the in-mold foamed molded product 20 and the polyurethane foam-molding mold D. Specifically, from the viewpoint of preventing the entry of the polyurethane liquid P and the polyurethane foam 30, it is preferable that the sealing protrusion 22 be formed so as to be large in size. From the viewpoint of easiness to deform the sealing protrusion 22 when the sealing protrusion 22 is brought into contact with the polyurethane foam-molding mold D, it is preferable that the sealing protrusion 22 be formed so as to be small in size.

For example, the protrusion height of the sealing protrusion 22 (longitudinal length of the sealing protrusion 22 in Fig. 3) is preferably not less than 1.0 mm and not more than 15.0 mm, more preferably not less than 2.0 mm and not more than 12.0 mm, and even more preferably not less than 3.0 mm and not more than 8.0 mm. In a case where the protrusion height of the sealing protrusion 22 is lower than a lower limit, the sealing protrusion 22 cannot have a given shape. Further, in a case where the protrusion height of the sealing protrusion 22 is higher than an upper limit, the sealing protrusion 22 becomes difficult to deform. Accordingly, the sealing protrusion 22 and the polyurethane foam-molding mold D make poor contact with each other at the time when the sealing protrusion 22 is brought into contact with the polyurethane foam-molding mold D. This results in increase of the possibility that the polyurethane liquid P and the polyurethane foam 30 enter a gap between the contact surface 21a of the base 21 of the in-mold foamed molded product 20 and the polyurethane foam-molding mold D.

Further, the width of the sealing protrusion 22 (lateral length of the sealing protrusion 22 in Fig. 3) is preferably not less than 1.0 mm and not more than 15.0 mm, more preferably not less than 2.0 mm and not more than 10.0 mm, and even more preferably not less than 3.0 mm and not more than 5.0 mm.

In the present embodiment, the sealing protrusion 22 is provided in a place where a large gap between the polyurethane foam-molding mold D and the contact surface 21a is expected to be formed. This makes it possible to efficiently inhibit the entry of the polyurethane liquid P and the polyurethane foam 30 into a gap between the contact surface 21a of the base 21 of the in-mold foamed molded product 20 and the polyurethane foam-molding mold D.

The conventional in-mold foamed molded product deforms (shrinks) during foam of the polyurethane liquid P under heat. This increases a gap between the contact surface of the base of the in-mold foamed molded product and the polyurethane foam-molding mold D. This would give rise to the problem that the extent of entry of the polyurethane liquid P and the polyurethane foam 30 into the gap between the contact surface of the base of the in-mold foamed molded product and the polyurethane foam-molding mold D increases.

In contrast, the in-mold foamed molded product 20 in accordance with the present embodiment is molded from polyolefin-based resin expanded particles having a melting point or softening temperature of not lower than 110°C. This makes it possible to prevent deformation (shrinkage) of the in-mold foamed molded product 20 during foam of the polyurethane liquid P under heat. Consequently, it is possible to reduce the risk of causing an unexpected gap to be formed between the contact surface 21a and the polyurethane foam-molding mold D.

Note that the in-mold foamed molded product of the present invention may be such that an insert material I such as a metal wire is insert-molded in the in-mold foamed molded product. This allows the in-mold foamed molded product to have a higher strength. Further, using the insert material I exposed from the in-mold foamed molded product makes it easy to attach the in-mold foamed molded product to other component or a vehicle body. However, during the molding of the foamed composite molded product with use of the conventional in-mold foamed molded product in which the insert material I is insert-molded, more significant sinks and warps will occur on the conventional in-mold foamed molded product due to a difference in shrinkage ratio between the in-mold foamed molded product and the metal wire. This leads to increase of a gap between the contact surface of the base of the in-mold foamed molded product and the polyurethane foam-molding mold D, with the result that the polyurethane liquid P and the polyurethane foam 30 enter the gap between the contact surface of the base of the in-mold foamed molded product and the polyurethane foam-molding mold D. In contrast, the in-mold foamed molded product of the present invention includes a sealing protrusion, so that the in-mold foamed molded product of the present invention can prevent the polyurethane liquid P and the polyurethane foam 30 from entering a gap between the contact surface of the in-mold foamed molded product and the polyurethane foam-molding mold D.

As described above, the in-mold foamed molded product 20 in accordance with the present embodiment is made of polyolefin resin and has a surface (surface of the base 21). Moreover, the surface includes: the contact surface 21a at least part of which is in contact with the polyurethane foam-molding mold D in a placement completion state in which the in-mold foamed molded product 20 is placed in the polyurethane foam-molding mold D; and the sealing protrusion 22 configured to prevent the polyurethane liquid P introduced into the polyurethane foam-molding mold D and the polyurethane foam 30 obtained from the polyurethane liquid P from entering a gap between the contact surface 21a and the polyurethane foam-molding mold D.

The above configuration prevents the polyurethane liquid P and the polyurethane foam 30 from entering a gap between the contact surface 21a of the in-mold foamed molded product 20 and the polyurethane foam-molding mold D, which gap results from, for example, a sink and/or a warp that occur(s) on the in-mold foamed molded product 20, in the placement completion state. This makes it possible to prevent the polyurethane foam 30 from being molded in between the contact surface 21a and the polyurethane foam-molding mold D. Therefore, it is possible to prevent molding of a polyurethane foam in an unintended area so that the foamed composite molded product 10 can easily and efficiently be attached to a vehicle body.

### <Variation 1>

The sealing protrusion 22 in accordance with Embodiment 1 is trapezoidal in cross section, as illustrated in Fig. 4. However, the shape of a sealing protrusion of the present invention is not limited to this shape.
(a) and (b) of Fig. 6 are views illustrating the shapes of sealing protrusions, as variations, of the in-mold foamed molded product 20 and illustrating cross sections obtained by cutting the sealing protrusions along planes perpendicular to the contact surfaces 21a.

As illustrated in (a) of Fig. 6, a sealing protrusion 22A, which is a variation, is identical to the sealing protrusion 22 in that the sealing protrusion 22A is molded such that an area of a cross section perpendicular to a direction in which the sealing protrusion 22A juts out is smaller as a distance increases in the direction in which the sealing protrusion 22A juts out, but the sealing protrusion 22A is different from the sealing protrusion 22 in that the sealing protrusion 22A is round in cross section. The sealing protrusion 22A is molded such that the area of the cross section perpendicular to the direction in which the sealing protrusion 22A juts out is smaller as a distance increases in the direction in which the sealing protrusion 22A juts out. Thus, the sealing protrusion 22A is formed such that ease of deformation of the sealing protrusion 22A in response to a pressing force applied upon contact with other object increases with increasing proximity to the tip of the sealing protrusion 22A. Consequently, the sealing protrusion 22A can easily become flat when the sealing protrusion 22A interferes with other object.

Further, as illustrated in (b) of Fig. 6, a sealing protrusion 22B, which is a variation, is rectangular in cross section. Decreasing the width of the sealing protrusion 22B (in the left-to-right direction in (b) of Fig. 6) makes it easy for the whole sealing protrusion 22B to become flat. Consequently, the sealing protrusion 22B can easily become flat when the sealing protrusion 22B interferes with other object.

### <Variation 2>

The following will describe an in-mold foamed molded product 20A, which is a variation of the in-mold foamed molded product 20 in Embodiment 1, with reference to Fig. 7.

Fig. 7 is a cross-sectional view illustrating the in-mold foamed molded product 20A which has been integrally molded with the polyurethane foam 30 in the polyurethane foam-molding mold D.

As illustrated in Fig. 7, the in-mold foamed molded product 20A is different from the in-mold foamed molded product 20 in Embodiment 1 in that the sealing protrusion 22 is provided in a different position. Specifically, the in-mold foamed molded product 20A is configured such that the sealing protrusion 22 is provided in a position close to the contact surface 21a so as to protrude through the polyurethane foam-forming surface 21b of the base 21. The sealing protrusion 22 in the present variation is provided in a position to substantially contacts a surface of the polyurethane foam-molding mold D which surface faces the polyurethane foam-forming surface 21b, when the in-mold foamed molded product 20A is placed in the polyurethane foam-molding mold D.

Note that since the sealing protrusion 22 in the present variation is in an undercut shape, the protrusion height of the sealing protrusion 22 in the present variation (lateral length of the sealing protrusion 22 in Fig. 7) is preferably not more than 15.0 mm so that, in the process of molding the in-mold foamed molded product 20A with use of a mold apparatus for in-mold foam molding, the in-mold foamed molded product 20A can be easily removed from the mold apparatus for in-mold foam molding. Note that the "undercut shape" refers to a complex shape (e.g., convex shape and concave shape) such that, at the time of removing (ejecting) a molded product from a mold in the molding process, the molded product cannot be removed as it is.

As described above, the in-mold foamed molded product 20A is configured such that the sealing protrusion 22 comes into contact with the polyurethane foam-molding mold D when the in-mold foamed molded product 20A is placed in the polyurethane foam-molding mold D. This makes it possible to prevent entry of the polyurethane liquid P and the polyurethane foam 30 into a gap between the contact surface 21a of the base 21 of the in-mold foamed molded product 20 and the polyurethane foam-molding mold D. Consequently, it is possible to prevent the polyurethane foam 30 from being molded in the gap between the contact surface 21a and the polyurethane foam-molding mold D.

### [Embodiment 2]

The following will describe other embodiment of the present invention. For convenience of explanation, members having the same functions as those described in Embodiment 1 are given the same reference numerals, and explanations thereof are omitted here.

The following will describe an in-mold foamed molded product 50 and a foamed composite molded product 40 in accordance with the present embodiment with reference to Figs. 8 to 10. Fig. 8 is a cross-sectional view illustrating the structure of the foamed composite molded product 40 in accordance with the present embodiment. Fig. 9 is a view of the in-mold foamed molded product 50 in accordance with the present embodiment when viewed from a contact surface 21a side. Fig. 10 is a cross-sectional view illustrating a method of molding the foamed composite molded product 40 in accordance with the present embodiment.

As illustrated in Fig. 8, the foamed composite molded product 40 is a molded product in which the in-mold foamed molded product 50 and the polyurethane foam 30 are integrally molded.

The in-mold foamed molded product 20 in accordance with Embodiment 1 is configured such that the sealing protrusion 22 is provided in a part of the outer region of the contact surface 21a, as illustrated in Fig. 3.

In contrast, the in-mold foamed molded product 50 in accordance with the present embodiment, as illustrated in Fig. 9, includes a sealing protrusion 52 which is provided in a whole of an outer region of the contact surface 21a of the base 21.

With this configuration, as illustrated in Fig. 10, the in-mold foamed molded product 50, when placed in the polyurethane foam-molding mold D, completely separates a space into which the polyurethane liquid P is to be introduced and a space formed by the contact surface 21a, the polyurethane foam-molding mold D, and the sealing protrusion 52. Consequently, it is possible to completely prevent entry of the polyurethane liquid P and the polyurethane foam 30 into a gap between the contact surface 21a of the base 21 of the in-mold foamed molded product 50 and the polyurethane foam-molding mold D.

### [Embodiment 3]

The following will describe other embodiment of the present invention. For convenience of explanation, members having the same functions as those described in Embodiments 1 and 2 are given the same reference numerals, and explanations thereof are omitted here.

The following will describe an in-mold foamed molded product 70 and a foamed composite molded product 60 in accordance with the present embodiment with reference to Fig. 11. Fig. 11 is a cross-sectional view illustrating the structure of the foamed composite molded product 60 in accordance with the present embodiment.

As illustrated in Fig. 11, the foamed composite molded product 60 is a molded product in which the in-mold foamed molded product 70 and the polyurethane foam 30 are integrally molded.

The in-mold foamed molded product 70 in accordance with the present embodiment is different from the in-mold foamed molded product 20 and the in-mold foamed molded product 50 described in Embodiments 1 and 2, respectively, in that the in-mold foamed molded product 70 includes an anti-peeling protrusion (sub-protrusion) 71.

The anti-peeling protrusion 71 is a projection that protrudes through the polyurethane foam-forming surface 21b of the in-mold foamed molded product 70. In a state in which the in-mold foamed molded product 70 is placed in the polyurethane foam-molding mold D, the anti-peeling protrusion 71 is provided at a distance from the polyurethane foam-molding mold D, without contacting the polyurethane foam-molding mold D. The anti-peeling protrusion 71 is molded, in the mold apparatus for in-mold foam molding, simultaneously with the base 21 and the sealing protrusion 52 (or the sealing protrusion 22) by heating polyolefin-based resin expanded particles so that the polyolefin-based resin expanded particles are expanded and fused.

In the process of molding the foamed composite molded product 60 by integrally molding the in-mold foamed molded product 70 and the polyurethane foam 30, the anti-peeling protrusion 71 is brought into a state of being immersed in the polyurethane liquid P which has been introduced into the polyurethane foam-molding mold D. In such a state, when the polyurethane liquid P is heated, the entire anti-peeling protrusion 71 is brought into a state of being buried in the polyurethane foam 30. This makes it possible to prevent the polyurethane foam 30 from being peeled from the in-mold foamed molded product 70.

The in-mold foamed molded product 70 in accordance with the present embodiment is configured such that one anti-peeling protrusion 71 is provided. However, the in-mold foamed molded product of the present invention is not limited to such a configuration. Alternatively, two anti-peeling protrusions 71 may be provided, or three or more anti-peeling protrusions 71 may be provided.

Further, the anti-peeling protrusion 71 is preferably provided in and/or near a position to reliably prevent the polyurethane foam 30 from being peeled from the in-mold foamed molded product 70 or a position where the polyurethane foam 30 can be peeled from the in-mold foamed molded product 70. Further, the anti-peeling protrusion 71 is preferably provided on the polyurethane foam-forming surface 21b of the in-mold foamed molded product 70 in an area other than a face opposite the contact surface 21a. This is for the following reason: The face opposite the contact surface 21a is a seat surface, which a passenger's hip contacts, of a vehicle seat of an automobile and other vehicle, and providing the anti-peeling protrusion 71 on the face opposite the contact surface 21a leads to decrease in cushioning property of a seat. Further, the anti-peeling protrusion 71 may be provided in a part of the polyurethane foam-forming surface 21b of the in-mold foamed molded product 70 (see Fig. 11) or may be provided in a whole of the polyurethane foam-forming surface 21b so as to be parallel to the contact surface 21a of the polyurethane foam-forming surface 21b.

The number, shape, and size of the anti-peeling protrusion 71 are not particularly limited and are adjusted as appropriate in consideration of the size and shape of the polyurethane foam 30. Specifically, an upper limit of the size of the anti-peeling protrusion 71 is not provided because the size of the anti-peeling protrusion 71 can be increased with increase in size of the polyurethane foam 30. Further, a lower limit of the size of the anti-peeling protrusion 71 is not provided because there is the possibility that a very small anti-peeling protrusion 71 can produce a sufficient effect depending on the size and shape of the polyurethane foam 30. However, for general versatility, for example, the protrusion height of the anti-peeling protrusion 71 (lateral length of the anti-peeling protrusion 71 in Fig. 11) is preferably not less than 1.0 mm and not more than 15.0 mm, more preferably not less than 3.0 mm and not more than 10.0 mm. Since the anti-peeling protrusion 71 is in an undercut shape, the protrusion height of the anti-peeling protrusion 71 is preferably not more than 15.0 mm so that, in the process of molding the in-mold foamed molded product 70 with use of a mold apparatus for in-mold foam molding, the in-mold foamed molded product 70 can be easily removed from the mold apparatus for in-mold foam molding. Further, the width of the anti-peeling protrusion 71 (longitudinal length of the anti-peeling protrusion 71 in Fig. 11) is preferably not less than 1.0 mm and not more than 15.0 mm, and more preferably not less than 3.0 mm and not more than 10.0 mm.

### [Embodiment 4]

The following will describe other embodiment of the present invention. For convenience of explanation, members having the same functions as those described in Embodiments 1, 2, and 3 are given the same reference numerals, and explanations thereof are omitted here.

The present embodiment is different from other embodiments in that a polyurethane foam-molding mold includes a pushing protrusion.

The step of closing a polyurethane foam-molding mold D1 in the present embodiment will be described with reference to Fig. 12. Fig. 12 is a view illustrating the step of closing a polyurethane foam-molding mold D1 in the present embodiment, wherein (a) of Fig. 12 is a cross-sectional view illustrating a state before the polyurethane foam-molding mold D1 is closed, and (b) of Fig. 12 is a cross-sectional view illustrating a state after the polyurethane foam-molding mold D1 has been closed.

As illustrated in (a) and (b) of Fig. 12, the polyurethane foam-molding mold D1 in the present embodiment includes a first mold 81 and a second mold 82.

The first mold 81 is a mold on which the in-mold foamed molded product 20 is to be installed.

The second mold 82 is a mold for closing the polyurethane foam-molding mold D1 by being placed on the first mold 81. The second mold 82 includes a pushing protrusion 82a.

In the step of closing the polyurethane foam-molding mold D1, the polyurethane foam-molding mold D1 is closed when the second mold 82 is placed on the first mold 81, as illustrated in (a) and (b) of Fig. 12. In so doing, the pushing protrusion 82a of the second mold pushes the in-mold foamed molded product 20 toward the first mold 81. This causes the sealing protrusion 22 of the in-mold foamed molded product 20 to be pressed into contact with the first mold 81. This allows for more reliable contact between the sealing protrusion 22 and the polyurethane foam-molding mold D1.

### [Recap]

An in-mold foamed molded product according to claim 1.

The above feature prevents the polyurethane liquid and the polyurethane foam from entering a gap between the contact surface of the in-mold foamed molded product and the mold, which gap results from, for example, a sink and/or a warp that occur(s) on the in-mold foamed molded product, in the placement completion state. This makes it possible to prevent a polyurethane foam from being molded in between the contact surface and the mold. Thus, it is possible to prevent molding of a polyurethane foam in an unintended area so that a foamed composite molded product can easily and efficiently be attached to a vehicle body.

The in-mold foamed molded product in accordance with an aspect of the present invention is configured such that the sealing protrusion is provided in at least a part of an outer region of the contact surface.

This makes it possible to effectively inhibit the entry of the polyurethane liquid and the polyurethane foam into the gap between the contact surface and the mold.

The in-mold foamed molded product in accordance with an aspect of the present invention is preferably configured such that the sealing protrusion is provided in a position such that the sealing protrusion is in contact with the mold in the placement completion state.

With this configuration, no gap is formed between the sealing protrusion and the mold in the placement completion state. This makes it possible to more reliably inhibit the entry of the polyurethane liquid and the polyurethane foam into the gap between the contact surface and the mold.

The in-mold foamed molded product in accordance with an aspect of the present invention is preferably configured such that the sealing protrusion is formed such that ease of deformation of the sealing protrusion in response to a pressing force applied upon contact with another object (other object), which is different from the sealing protrusion, increases with increasing proximity to a tip of the sealing protrusion.

This allows the sealing protrusion to be configured such that when the tip of the sealing protrusion comes into contact with the mold, the sealing protrusion easily becomes flat, beginning with the tip of the sealing protrusion, under pressure from the mold. This allows for better contact between the sealing protrusion and the polyurethane foam-molding mold. Further, at the time of attaching the foamed composite molded product to a vehicle body, the sealing protrusion becomes flat upon contact with the vehicle body. This makes it possible to reduce the risk of hampering attachment of the foamed composite molded product to the vehicle body.

The in-mold foamed molded product in accordance with an aspect of the present invention is preferably configured to further include a sub-protrusion which is provided at a distance from the mold in the placement completion state.

This makes it possible to immerse the sub-protrusion in the polyurethane liquid which has been introduced into the mold. This allows the sub-protrusion to be buried in the polyurethane foam when the foamed composite molded product is molded by integrally molding the in-mold foamed molded product and the polyurethane foam. This configuration consequently makes it possible to prevent the polyurethane foam from being peeled from the in-mold foamed molded product.

The in-mold foamed molded product in accordance with an aspect of the present invention may be configured such that an insert material is insert-molded.

The above configuration allows the in-mold foamed molded product to have a higher strength. Further, using the insert material exposed from the in-mold foamed molded product makes it easy to attach the in-mold foamed molded product to other component or a vehicle body.

A foamed composite molded product in accordance with an aspect of the present invention is a foamed composite molded product including: any of the in-mold foamed molded products described above; and a polyurethane foam, the in-mold foamed molded product and the polyurethane foam being integrally molded, the in-mold foamed molded product having the contact surface which is exposed.

According to the above feature, the sealing protrusion of the in-mold foamed molded product prevents the polyurethane foam from being molded on the contact surface. This allows the contact surface to be attached to a vehicle body, and thus makes it easy to attach the foamed composite molded product to the vehicle body. Moreover, this does away with the trouble of removing the polyurethane foam from the contact surface. Thus, it is possible to efficiently attach the foamed composite molded product to the vehicle body.

The foamed composite molded product in accordance with an aspect of the present invention is preferably configured such that the olefin resin has a melting point or softening temperature of not lower than 115°C.

This makes it possible to prevent the in-mold foamed molded product from being deformed (shrunk) by heat applied at the time of foaming the polyurethane liquid to mold the polyurethane foam. Consequently, it is possible to reduce the risk of causing an unexpected gap to be formed between the contact surface and the mold.

A method of producing a foamed composite molded product according to claim 8.

According to the feature, the in-mold foamed molded product includes the sealing protrusion which prevents the polyurethane foam from being molded on the contact surface. This makes it possible to prevent the polyurethane liquid and the polyurethane foam from entering a gap between the contact surface of the in-mold foamed molded product and the mold, which gap results from, for example, a sink and/or a warp that occur(s) on the in-mold foamed molded product, in the step of introducing the polyurethane liquid into the mold. Thus, it is possible to prevent a polyurethane foam from being molded in between the contact surface and the mold. Consequently, it is possible to produce a foamed composite molded product which can prevent molding of a polyurethane foam in an unintended area and can be easily and efficiently attached to the vehicle body.

The method of producing a foamed composite molded product in accordance with an aspect of the present invention is preferably configured such that the in-mold foamed molded product is an olefin resin-containing in-mold foamed molded product having a melting point or softening temperature of not lower than 115°C.

This makes it possible to prevent the in-mold foamed molded product from being deformed (shrunk) in the step of foaming the polyurethane liquid to mold the polyurethane foam.

The method of producing a foamed composite molded product in accordance with an aspect of the present invention is preferably configured to further include the step of closing the mold wherein the mold is pressed against the in-mold foamed molded product to press the sealing protrusion into contact with the mold.

According to the above configuration, pressing the sealing protrusion into contact with the mold enables more reliable contact between the sealing protrusion and the mold.

Use of a mold for integrally molding a polyurethane foam with an olefin resin-containing in-mold foamed molded product according to claim 11.

According to this feature, the pushing protrusion pushes the in-mold foamed molded product toward the mold. This makes it possible to press the sealing protrusion into contact with the mold. This consequently allows for more reliable contact between the sealing protrusion and the mold.

The present invention is not limited to the embodiments, but can be altered by a skilled person in the art within the scope of the claims. The present invention also encompasses, in its technical scope, any embodiment derived by combining technical means disclosed in differing embodiments.

### [Examples]

As examples of the in-mold foamed molded product of the present invention were prepared in-mold foamed molded products in Examples 1 to 7 below. As comparative examples were prepared in-mold foamed molded products in Comparative Examples 1 to 4 below. Note that each of the in-mold foamed molded products in Examples 1 to 7 and Comparative Examples 1 to 4 was prepared in the shape of a rectangle 1300 mm in length, 600 mm in width, and 150 mm in thickness. Further, each metal wire used in Examples 5 and 6 and Comparative Example 4 was made of iron and was in the shape of a rectangle 4.5 mm in diameter, 1200 mm in length, 500 mm in width.

### (Example 1)

The in-mold foamed molded product in Example 1 was prepared with use of olefin-based resin expanded particles (manufactured by KANEKA CORPORATION, XL35, ethylene-α-olefin block copolymer, bulk density of 20 g/L, melting point of 117°C, no internal pressure applied). In the case of the in-mold foamed molded product in Example 1, a sealing protrusion (trapezoidal in cross section obtained by cutting the sealing protrusion along a plane in a direction in which the sealing protrusion juts out, protrusion height of 4.0 mm, tip width of 3.0 mm, root width of 5.0 mm) was molded in a part of an outer region of a contact surface. Further, in the case of the in-mold foamed molded product in Example 1, no anti-peeling protrusion was molded.

### (Example 2)

The in-mold foamed molded product in Example 2 was prepared with use of olefin-based resin expanded particles (manufactured by KANEKA CORPORATION, XL35, ethylene-α-olefin block copolymer, bulk density of 20 g/L, melting point of 117°C, no internal pressure applied). In the case of the in-mold foamed molded product in Example 2, a sealing protrusion identical in cross-sectional shape and size to the sealing protrusion of the in-mold foamed molded product in Example 1 was molded in a whole of an outer region of a contact surface. Further, in the case of the in-mold foamed molded product in Example 2, no anti-peeling protrusion was molded.

### (Example 3)

The in-mold foamed molded product in Example 3 was prepared with use of olefin-based resin expanded particles (manufactured by KANEKA CORPORATION, XL35, ethylene-α-olefin block copolymer, bulk density of 20 g/L, melting point of 117°C, no internal pressure applied). In the case of the in-mold foamed molded product in Example 3, a sealing protrusion identical in cross-sectional shape and size to the sealing protrusion of the in-mold foamed molded product in Example 1 was molded in a whole of an outer region of a contact surface. Further, in the case of the in-mold foamed molded product in Example 3, an anti-peeling protrusion (rectangular in cross section obtained by cutting the sealing protrusion along a plane in a direction in which the sealing protrusion juts out, protrusion height of 10.0 mm, width of 10.0 mm, length (length in a direction vertical to a paper sheet of Fig. 11) of 50.0 mm) was molded at a position shown in Fig. 11.

### (Example 4)

The in-mold foamed molded product in Example 4 was prepared with use of olefin-based resin expanded particles (manufactured by KANEKA CORPORATION, L-EPP36, ethylene-propylene random copolymer, bulk density of 20 g/L, melting point of 146°C, internal pressure adjusted to approximately 0.1 MPa (G) by impregnating the olefin-based resin expanded particles with a pressurized air in a pressure-resistant vessel). In the case of the in-mold foamed molded product in Example 4, a sealing protrusion identical in cross-sectional shape and size to the sealing protrusion of the in-mold foamed molded product in Example 1 was molded in a whole of an outer region of a contact surface. Further, in the case of the in-mold foamed molded product in Example 4, an anti-peeling protrusion identical in cross-sectional shape and size to the anti-peeling protrusion of the in-mold foamed molded product in Example 3 was molded.

### (Example 5)

The in-mold foamed molded product in Example 5 was prepared, with use of olefin-based resin expanded particles (manufactured by KANEKA CORPORATION, L-EPP36, ethylene-propylene random copolymer, bulk density of 20 g/L, melting point of 146°C, internal pressure adjusted to approximately 0.1 MPa (G) by impregnating the olefin-based resin expanded particles with a pressurized air in a pressure-resistant vessel), with the metal wire integrally molded therein. In the case of the in-mold foamed molded product in Example 5, a sealing protrusion identical in cross-sectional shape and size to the sealing protrusion of the in-mold foamed molded product in Example 1 was molded in a whole of an outer region of a contact surface. Further, in the case of the in-mold foamed molded product in Example 5, no anti-peeling protrusion was molded.

### (Example 6)

The in-mold foamed molded product in Example 6 was prepared, with use of olefin-based resin expanded particles (manufactured by KANEKA CORPORATION, L-EPP36, ethylene-propylene random copolymer, bulk density of 20 g/L, melting point of 146°C, internal pressure adjusted to approximately 0.1 MPa (G) by impregnating the olefin-based expanded resin particles with a pressurized air in a pressure-resistant vessel), with the metal wire integrally molded therein. In the case of the in-mold foamed molded product in Example 6, a sealing protrusion (trapezoidal in cross section obtained by cutting the sealing protrusion along a plane in a direction in which the sealing protrusion juts out; protrusion height of 8.0 mm; tip width of 3.0 mm; root width of 5.0 mm) was molded in a whole of an outer region of a contact surface. Further, in the case of the in-mold foamed molded product in Example 6, no anti-peeling protrusion was molded.

### (Example 7)

The in-mold foamed molded product in Example 7 was prepared with use of olefin-based resin expanded particles (manufactured by KANEKA CORPORATION, XL35, ethylene-α-olefin block copolymer, bulk density of 20 g/L, melting point of 117°C, no internal pressure applied). In the case of the in-mold foamed molded product in Example 7, a sealing protrusion (rectangular in cross section obtained by cutting the sealing protrusion along a plane in a direction in which the sealing protrusion juts out; protrusion height of 30.0 mm; width of 30.0 mm) was molded in a part of an outer region of a contact surface. Further, in the case of the in-mold foamed molded product in Example 7, no anti-peeling protrusion was molded.

### (Comparative Example 1)

The in-mold foamed molded product in Comparative Example 1 was prepared with use of olefin-based resin expanded particles (manufactured by KANEKA CORPORATION, XL35, ethylene-α-olefin block copolymer, bulk density of 20 g/L, melting point of 117°C, no internal pressure applied). In the case of the in-mold foamed molded product in Comparative Example 1, neither sealing protrusion nor anti-peeling protrusion was molded.

### (Comparative Example 2)

The in-mold foamed molded product in Comparative Example 2 was prepared with use of expanded polystyrene particles (manufactured by KANEKA CORPORATION, MKM, bulk density of 17 g/L, softening temperature of 100°C). In the case of the in-mold foamed molded product in Comparative Example 2, neither sealing protrusion nor anti-peeling protrusion was molded.

### (Comparative Example 3)

The in-mold foamed molded product in Comparative Example 3 was prepared with use of expanded polystyrene particles (manufactured by KANEKA CORPORATION, MKM, bulk density of 17 g/L, softening temperature of 100°C). In the case of the in-mold foamed molded product in Comparative Example 3, a sealing protrusion identical in cross-sectional shape and size to the sealing protrusion of the in-mold foamed molded product in Example 1 was molded in a part of an outer region of a contact surface. Further, in the case of the in-mold foamed molded product in Comparative Example 3, no anti-peeling protrusion was molded.

### (Comparative Example 4)

The in-mold foamed molded product in Comparative Example 4 was prepared, with use of olefin-based resin expanded particles (manufactured by KANEKA CORPORATION, L-EPP36, ethylene-propylene random copolymer, bulk density of 20 g/L, melting point of 146°C, internal pressure adjusted to approximately 0.1 MPa (G) by impregnating the olefin-based resin expanded particles with a pressurized air in a pressure-resistant vessel), with the metal wire integrally molded therein. In the case of the in-mold foamed molded product in Comparative Example 4, neither sealing protrusion nor anti-peeling protrusion was molded.

### (Evaluations)

Foamed composite molded products were produced with use of the corresponding in-mold foamed molded products in Examples 1 to 7 and Comparative Examples 1 to 4 and were evaluated in the following three categories:
(1) Deformation (shrinkage) of the in-mold foamed molded product
(2) Molding of a polyurethane foam on the contact surface side
(3) Peeling of the polyurethane foam from the in-mold foamed molded product

Table 1 shows results of these evaluations.

Note that evaluation criteria shown in Table 1 are as provided below.

### (1) Criteria of deformation (shrinkage) evaluation

The produced foamed composite molded product was placed on an inspection jig for in-mold foamed molded product, was checked for lifts on the contact surface of the in-mold foamed molded product, and was evaluated in accordance with the following criteria.

Excellent: There was no lift.

Failed: There was a lift.

### (2) Criteria of entry evaluation

The contact surface of the in-mold foamed molded product of each of the produced foamed composite molded products was checked and evaluated in accordance with the following criteria.

Excellent: No polyurethane foam entered a gap between the contact surface and a polyurethane foam-molding mold.

Good: The sealing protrusion was effective in inhibiting the entry of the polyurethane foam into the gap between the contact surface and the polyurethane foam-molding mold.

Poor: A smaller amount of polyurethane foam than the amount of polyurethane foam established in the criteria "Failed" below entered the gap between the contact surface and the polyurethane foam-molding mold.

Failed: There was entry of the polyurethane foam into the gap between the contact surface and the polyurethane foam-molding mold.

### (3) Criteria of peeling evaluation

On the ease of peeling in separating the polyurethane foam near the anti-peeling protrusion from the in-mold foamed molded product by hand, evaluation criteria are as below.
Excellent: Not easily peeled
Failed: Easily peeled

**[Table 1]**

| | Melting point (or softening temperature) | Sealing protrusion | Anti-peeling protrusion | Flexibility of sealing protrusion | Space division | Wire | Deformation (shrinkage) | Entry | Peeling |
|---|---|---|---|---|---|---|---|---|---|
| Example 1 | 117°C | Present | Absent | Present | Absent | Absent | E | G | F |
| Example 2 | 117°C | Present | Absent | Present | Present | Absent | E | E | F |
| Example 3 | 117°C | Present | Present | Present | Present | Absent | E | E | E |
| Example 4 | 146°C | Present | Present | Present | Present | Absent | E | E | E |
| Example 5 | 146°C | Present | Absent | Present | Absent | Present | E | G | F |
| Example 6 | 146°C | Present | Absent | Present | Present | Present | E | E | F |
| Example 7 | 117°C | Present | Absent | Absent | Absent | Absent | E | P | F |
| Comparative Example 1 | 117°C | Absent | Absent | - | - | Absent | E | F | F |
| Comparative Example 2 | 100°C | Absent | Absent | - | - | Absent | F | F | E |
| Comparative Example 3 | 100°C | Present | Absent | Absent | Absent | Absent | F | F | E |
| Comparative Example 4 | 146°C | Absent | Absent | - | - | Present | E | F | F |

| | | | | | | | | | |
|---|---|---|---|---|---|---|---|---|---|
| Abbreviations: "E", "G", "P", and "F" stand for "excellent", "good", "poor", and "failed", respectively. | | | | | | | | | |

As shown in Table 1, the in-mold foamed molded products in Examples 1 to 7 and Comparative Examples 1 and 4, which were prepared with use of olefin-based resin expanded particles having high melting points, were capable of preventing deformation (shrinkage) of the in-mold foamed molded products during the production of the corresponding foamed composite molded products. This made it possible to inhibit molding of the polyurethane foam on the contact surface side.

Further, the in-mold foamed molded products in Examples 1 to 7, which had the corresponding molded sealing protrusions, were capable of further inhibiting molding of the polyurethane foam on the contact surface side. Note that in the case of the in-mold foamed molded product in Example 7, the sealing protrusion, which was rectangular in cross section obtained by cutting the sealing protrusion along a plane in the direction in which the sealing protrusion juts out and was as large as 30.0 mm in protrusion height and 30.0 mm in width, did not become flat when the sealing protrusion came into contact with the polyurethane foam-molding mold. This consequently formed a large gap between the contact surface of the in-mold foamed molded product and the polyurethane foam-molding mold and thus resulted in entry of a small amount of polyurethane foam into the gap.

Here, the difference between with or without the sealing protrusion in extent of entry of the polyurethane foam during the molding of the foamed composite molded product will be described with reference to Fig. 13. (a) of Fig. 13 is a view, when the in-mold foamed molded product in Example 1 is viewed from the contact surface side, illustrating the presence or absence of entry of the polyurethane foam during molding of the foamed composite molded product with use of the in-mold foamed molded product in Example 1. (b) of Fig. 13 is a view, when the in-mold foamed molded product in Comparative Example 2 is viewed from the contact surface side, illustrating the presence or absence of entry of the polyurethane foam during molding of the foamed composite molded product with use of the in-mold foamed molded product in Comparative Example 2.

As illustrated in (a) of Fig. 13, during molding of the foamed composite molded product with use of the in-mold foamed molded product in Example 1 including the sealing protrusion, the in-mold foamed molded product in Example 1 was capable of inhibiting entry of the polyurethane foam into the gap between the contact surface of the in-mold foamed molded product and the polyurethane foam-molding mold.

In contrast, as illustrated in (b) of Fig. 13, during molding of the foamed composite molded product with use of the in-mold foamed molded product in Comparative Example 2 including no sealing protrusion, the polyurethane foam entered the gap between the contact surface of the in-mold foamed molded product and the polyurethane foam-molding mold.

Further, each of the sealing protrusions provided in the corresponding in-mold foamed molded products in Examples 1 to 6 was trapezoid in cross section obtained by cutting the sealing protrusion along a plane in the direction in which the sealing protrusion jutted out and was molded such that the area of a cross section of the sealing protrusion decreased with increasing proximity to a tip of the sealing protrusion. Thus, ease of deformation of the sealing protrusion in response to a pressing force applied upon contact with other object increased with increasing proximity to the tip of the sealing protrusion. That is, the sealing protrusion had flexibility. Consequently, the sealing protrusion easily became flat upon contact with the polyurethane foam-molding mold. This allowed for excellent contact between the sealing protrusion and the polyurethane foam-molding mold, and the sealing protrusion was thus capable of inhibiting entry of the polyurethane foam into the gap between the contact surface and the polyurethane foam-molding mold.

Further, in the case of the in-mold foamed molded products in Examples 2 to 4 and Example 6, the sealing protrusion was molded in the whole of the outer region of the contact surface. That is, each of the in-mold foamed molded products in Examples 2 to 4 and Example 6, when placed in the polyurethane foam-molding mold, completely separated a space to be filled with the polyurethane liquid and a space formed by the contact surface, the polyurethane foam-molding mold, and the sealing protrusion (Each of the in-mold foamed molded products in Examples 2 to 4 and Example 6 achieved space division). Thus, it was possible to completely prevent the polyurethane foam from being molded on the contact surface side.

In the case of each of the in-mold foamed molded products in Examples 1, 2, 5 and 6, the polyurethane foam was easily peeled from the in-mold foamed molded product. In contrast, in the case of each of the in-mold foamed molded products in Examples 3 and 4 including the molded anti-peeling protrusion, the polyurethane foam was not easily peeled from the in-mold foamed molded product.

Further, in the case of the foamed composite molded products molded with use of the in-mold foamed molded products in Examples 5, 6, and Comparative Example 4, each of the in-mold foamed molded products was prepared with the metal wire integrally molded therein. Thus, during molding of the in-mold foamed molded products, the in-mold foamed molded products were slightly deformed in comparison with the in-mold foamed molded products with no metal wire integrally molded therein. However, the in-mold foamed molded products in Examples 5 and 6 including the molded sealing protrusion were capable of inhibiting entry of the polyurethane foam into the gap between the contact surface of the in-mold foamed molded product and the polyurethane foam-molding mold. Particularly, the foamed composite molded product which had been molded with use of the in-mold foamed molded product in Example 6 had the sealing protrusion which was as large as 8.0 mm in height. Thus, the in-mold foamed molded product in Example 6, when placed in the polyurethane foam-molding mold, achieved complete separation between a space to be filled with the polyurethane liquid and a space formed by the contact surface, the polyurethane foam-molding mold, and the sealing protrusion (That is, the in-mold foamed molded product in Example 6 achieved space division). Consequently, it was possible to completely prevent entry of the polyurethane foam into the gap between the contact surface of the in-mold foamed molded product and the polyurethane foam-molding mold.

### Reference Signs List

- 10, 10A, 40, 60: Foamed composite molded product
- 20, 50, 70: In-mold foamed molded product
- 21: Base
- 21a: Contact surface
- 21b: Polyurethane foam-forming surface
- 22, 22A, 22B, 52: Sealing protrusion
- 30: Polyurethane foam
- 71: Anti-peeling protrusion (sub-protrusion)
- D, D1: Polyurethane foam-molding mold (mold)
- 82a: Pushing protrusion
- I: Insert material
- P: Polyurethane liquid

## Claims

1. An in-mold foamed molded product (20, 50, 70) which is an olefin resin-containing in-mold foamed molded product having a melting point or softening temperature of not lower than 110°C,
the in-mold foamed molded product (20, 50, 70) comprising:
a contact surface (21a) at least part of which is in contact with a mold in a placement completion state in which the in-mold foamed molded product (20, 50, 70) is placed in the mold; and
a sealing protrusion (22, 22A, 22B, 52) which prevents a polyurethane liquid introduced into the mold and a polyurethane foam (30) obtained from the polyurethane liquid from entering in between the contact surface (21a) and the mold in the placement completion state, wherein the sealing protrusion (22, 22A, 22B, 52) is molded from a foam and is formed such that ease of deformation of the sealing protrusion (22, 22A, 22B, 52) in response to a pressing force applied upon contact with another object, which is different from the sealing protrusion (22, 22A, 22B, 52), increases with increasing proximity to a tip of the sealing protrusion (22, 22A, 22B, 52),
wherein the in-mold foamed molded product (20, 50, 70) is an in-mold foamed molded product made up of polyolefin-based resin expanded particles or expanded particles of a composite resin that contains a polyolefin resin and a polystyrene resin,

2. The in-mold foamed molded product according to claim 1, wherein the sealing protrusion (22, 22A, 22B, 52) is provided in at least a part of an outer region of the contact surface (21a).

3. The in-mold foamed molded product according to claim 1 or 2, wherein the sealing protrusion (22, 22A, 22B, 52) is provided in a position such that the sealing protrusion (22, 22A, 22B, 52) is in contact with the mold in the placement completion state.

4. The in-mold foamed molded product according to any one of claims 1 to 3, further comprising:
a sub-protrusion which is provided at a distance from the mold in the placement completion state.

5. The in-mold foamed molded product according to any one of claims 1 to 4, wherein an insert material is insert-molded.

6. A foamed composite molded product comprising:
the in-mold foamed molded product according to any one of claims 1 to 5; and
a polyurethane foam (30),
the in-mold foamed molded product (20, 50, 70) and the polyurethane foam (30) being integrally molded,
the in-mold foamed molded product (20, 50, 70) having the contact surface (21a) which is exposed.

7. The foamed composite molded product according to claim 6, wherein the foamed composite molded product has a melting point or softening temperature of not lower than 115°C.

8. A method of producing a foamed composite molded product, comprising the steps of:
bringing an in-mold foamed molded product (20, 50, 70) into a placement completion state in which the in-mold foamed molded product (20, 50, 70) is placed in a mold, wherein the in-mold foamed molded product (20, 50, 70) is an in-mold foamed molded product made up of polyolefin-based resin expanded particles or expanded particles of a composite resin that contains a polyolefin resin and a polystyrene resin;
introducing a polyurethane liquid into the mold; and
foaming the polyurethane liquid to integrally mold a polyurethane foam (30) with the in-mold foamed molded product (20, 50, 70),
the in-mold foamed molded product (20, 50, 70) being an olefin resin-containing in-mold foamed molded product having a melting point or softening temperature of not lower than 110°C,
the in-mold foamed molded product (20, 50, 70) including: a contact surface (21a) at least part of which is in contact with the mold in the placement completion state; and a sealing protrusion (22, 22A, 22B, 52) which prevents the polyurethane liquid introduced into the mold and the polyurethane foam (30) obtained from the polyurethane liquid from entering in between the contact surface (21a) and the mold in the placement completion state, wherein the sealing protrusion (22, 22A, 22B, 52) is molded from a foam and is formed such that ease of deformation of the sealing protrusion (22, 22A, 22B, 52) in response to a pressing force applied upon contact with another object, which is different from the sealing protrusion (22, 22A, 22B, 52), increases with increasing proximity to a tip of the sealing protrusion (22, 22A, 22B, 52),

9. The method according to claim 8, wherein the in-mold foamed molded product (20, 50, 70) is an olefin resin-containing in-mold foamed molded product (20, 50, 70) having a melting point or softening temperature of not lower than 115°C.

10. The method according to claim 8 or 9, further comprising the step of:
closing the mold wherein the mold is pressed against the in-mold foamed molded product (20, 50, 70) to press the sealing protrusion (22, 22A, 22B, 52) into contact with the mold.

11. Use of a mold for integrally molding a polyurethane foam (30) with an olefin resin-containing in-mold foamed molded product (20, 50, 70) having a melting point or softening temperature of not lower than 110°C,
the in-mold foamed molded product (20, 50, 70) comprising:
a contact surface (21a) at least part of which is in contact with the mold in a placement completion state in which the in-mold foamed molded product (20, 50, 70) is placed in the mold; and
a sealing protrusion (22, 22A, 22B, 52) which prevents a polyurethane liquid introduced into the mold and a polyurethane foam (30) obtained from the polyurethane liquid from entering in between the contact surface (21a) and the mold in the placement completion state, wherein the sealing protrusion (22, 22A, 22B, 52) is molded from a foam and is formed such that ease of deformation of the sealing protrusion (22, 22A, 22B, 52) in response to a pressing force applied upon contact with another object, which is different from the sealing protrusion (22, 22A, 22B, 52), increases with increasing proximity to a tip of the sealing protrusion (22, 22A, 22B, 52),
wherein the in-mold foamed molded product (20, 50, 70) is an in-mold foamed molded product made up of polyolefin-based resin expanded particles or expanded particles of a composite resin that contains a polyolefin resin and a polystyrene resin,
the mold comprising:
a pushing protrusion which causes the sealing protrusion (22, 22A, 22B, 52) to be pressed into contact with the mold when the pushing protrusion pushes the in-mold foamed molded product (20, 50, 70) in the placement completion state toward the mold.

## Patentansprüche

1. Ein in der Form geschäumter Formkörper (20, 50, 70), der ein olefinharzhaltiger, in der Form geschäumter Formkörper mit einem Schmelzpunkt oder einer Erweichungstemperatur von nicht niedriger als 110°C ist,
wobei der in der Form geschäumte Formkörper (20, 50, 70) umfasst:
eine Kontaktfläche (21a), von der mindestens ein Teil in Kontakt mit einer Form in einem abgeschlossenen Platzierungszustand ist, in dem der in der Form geschäumte Formkörper (20, 50, 70) in der Form platziert ist; und
einen Dichtungsvorsprung (22, 22A, 22B, 52), der verhindert, dass eine in die Form eingebrachte Polyurethanflüssigkeit und ein aus der Polyurethanflüssigkeit erhaltener Polyurethanschaum (30) im abgeschlossenen Platzierungszustand zwischen die Kontaktfläche (21a) und die Form eindringen, wobei der Dichtungsvorsprung (22, 22A, 22B, 52) aus einem Schaum geformt ist und so geformt ist, dass die leichte Verformbarkeit des Dichtungsvorsprungs (22, 22A, 22B, 52) als Reaktion auf eine Druckkraft, die bei Kontakt mit einem anderen Gegenstand, der sich von dem Dichtungsvorsprung (22, 22A, 22B, 52) unterscheidet, ausgeübt wird, mit zunehmender Nähe zu einer Spitze des Dichtungsvorsprungs (22, 22A, 22B, 52) zunimmt,
wobei der in der Form geschäumte Formkörper (20, 50, 70) ein in der Form geschäumter Formkörper ist, der aus expandierten Harzteilchen auf Polyolefinbasis oder aus expandierten Verbundharzteilchen , die ein Polyolefinharz und ein Polystyrolharz enthalten, gemacht ist.

2. Der in der Form geschäumte Formkörper nach Anspruch 1, wobei der Dichtungsvorsprung (22, 22A, 22B, 52) in mindestens einem Teil eines äußeren Bereichs der Kontaktfläche (21a) bereitgestellt ist.

3. Der in der Form geschäumte Formkörper nach Anspruch 1 oder 2, wobei der Dichtungsvorsprung (22, 22A, 22B, 52) in einer solchen Position vorgesehen ist, dass der Dichtungsvorsprung (22, 22A, 22B, 52) im abgeschlossenen Platzierungszustand in Kontakt mit der Form ist.

4. Der in der Form geschäumte Formkörper nach einem der Ansprüche 1 bis 3, ferner umfassend:
ein Untervorsprung, der in einem Abstand von der Form im abgeschlossenen Platzierungszustand vorgesehen ist.

5. Der in der Form geschäumte Formkörper nach einem der Ansprüche 1 bis 4, wobei ein Einsatzmaterial einsatzgeformt wird,

6. Ein geschäumter Verbundformkörper, umfassend:
den in der Form geschäumten Formkörper nach einem der Ansprüche 1 bis 5; und
einen Polyurethanschaum (30),
wobei der in der Form geschäumte Formkörper (20, 50, 70) und der Polyurethanschaum (30) einstückig geformt sind,
wobei der in der Form geschäumte Formkörper (20, 50, 70) eine Kontaktfläche (21a) aufweist, die freiliegend ist.

7. Der geschäumte Verbundformkörper nach Anspruch 6, wobei der geschäumte Verbundformkörper einen Schmelzpunkt oder eine Erweichungstemperatur von nicht niedriger als 115°C hat.

8. Ein Verfahren zur Herstellung eines geschäumten Verbundformkörpers, umfassend die Schritte:
Das in einen abgeschlossenen Platzierungszustand Bringen des in der Form geschäumten Formkörpers (20, 50, 70), in dem der in der Form geschäumte Formkörper (20, 50, 70) in einer Form platziert ist, wobei der in der Form geschäumte Formkörper (20, 50, 70) ein in der Form geschäumter Formkörper ist, der aus expandierten Harzteilchen auf Polyolefinbasis oder aus expandierten Verbundharzteilchen , die ein Polyolefinharz und ein Polystyrolharz enthalten, gemacht ist;
Einbringen einer Polyurethanflüssigkeit in die Form; und
Schäumen der Polyurethanflüssigkeit, um einen Polyurethanschaum (30) mit dem in der Form geschäumten Formkörper (20, 50, 70) einstückig zu formen,
wobei der in der Form geschäumte Formkörper (20, 50, 70) ein olefinharzhaltiger in der Form geschäumter Formkörper mit einem Schmelzpunkt oder einer Erweichungstemperatur von nicht niedriger als 110°C ist,
wobei der in der Form geschäumte Formkörper (20, 50, 70) beinhaltet: eine Kontaktfläche (21a), von der zumindest ein Teil in einem abgeschlossenen Platzierungszustand in Kontakt mit der Form ist; und einen Dichtungsvorsprung (22, 22A, 22B, 52), der verhindert, dass die in die Form eingebrachte Polyurethanflüssigkeit und der aus der Polyurethanflüssigkeit erhaltene Polyurethanschaum (30) in einem abgeschlossenen Platzierungszustand zwischen die Kontaktfläche (21a) und die Form eindringen, wobei der Dichtungsvorsprung (22, 22A, 22B, 52) aus einem Schaum geformt ist und so geformt ist, dass die leichte Verformbarkeit des Dichtungsvorsprungs (22, 22A, 22B, 52) als Reaktion auf eine Druckkraft, die bei Kontakt mit einem anderen Gegenstand, der sich von dem Dichtungsvorsprung (22, 22A, 22B, 52) unterscheidet, ausgeübt wird, mit zunehmender Nähe zu einer Spitze des Dichtungsvorsprungs (22, 22A, 22B, 52) zunimmt.

9. Das Verfahren nach Anspruch 8, wobei der in der Form geschäumte Formkörper (20, 50, 70) ein olefinharzhaltiger in der Form geschäumter Formkörper (20, 50, 70) mit einem Schmelzpunkt oder einer Erweichungstemperatur von nicht niedriger als 115°C ist.

10. Das Verfahren nach Anspruch 8 oder 9, ferner umfassend den Schritt:
Schließen der Form, wobei die Form gegen den in der Form geschäumten Formkörper (20, 50, 70) gedrückt wird, um den Dichtungsvorsprung (22, 22A, 22B, 52) in Kontakt mit der Form zu drücken.

11. Die Verwendung einer Form zum einstückigen Formen eines Polyurethanschaums (30) mit einem olefinharzhaltigen in der Form geschäumten Formkörper (20, 50, 70) mit einem Schmelzpunkt oder einer Erweichungstemperatur von nicht niedriger als 110°C, wobei der in der Form geschäumte Formkörper (20, 50, 70) umfasst:
eine Kontaktfläche (21a), von der zumindest ein Teil in einem abgeschlossenen Platzierungszustand in Kontakt mit der Form ist, in dem der in der Form geschäumte Formkörper (20, 50, 70) in der Form platziert ist, und
einen Dichtungsvorsprung (22, 22A, 22B, 52), der verhindert, dass eine in die Form eingebrachte Polyurethanflüssigkeit und ein aus der Polyurethanflüssigkeit erhaltener Polyurethanschaum (30) in einem abgeschlossenen Platzierungszustand zwischen die Kontaktfläche (21a) und die Form eindringen, wobei der Dichtungsvorsprung (22, 22A, 22B, 52) aus einem Schaum geformt ist und so geformt ist, dass die leichte Verformbarkeit des Dichtungsvorsprungs (22, 22A, 22B, 52) als Reaktion auf eine Druckkraft, die bei Kontakt mit einem anderen Gegenstand, der sich von dem Dichtungsvorsprung (22, 22A, 22B, 52) unterscheidet, ausgeübt wird, mit zunehmender Nähe zu einer Spitze des Dichtungsvorsprungs (22, 22A, 22B, 52) zunimmt,
wobei der in der Form geschäumte Formkörper (20, 50, 70) ein in der Form geschäumter Formkörper ist, der aus expandierten Harzteilchen auf Polyolefinbasis oder aus expandierten Verbundharzteilchen , die ein Polyolefinharz und ein Polystyrolharz enthalten, gemacht ist,
wobei die Form umfasst:
einen Druckvorsprung, der bewirkt, dass der Dichtungsvorsprung (22, 22A, 22B, 52) in Kontakt mit der Form gepresst wird, wenn der Druckvorsprung den in der Form geschäumten Formkörper (20, 50, 70) in einem abgeschlossenen Platzierungszustand in Richtung der Form drückt.

## Revendications

1. Produit moulé expansé dans le moule (20, 50, 70) qui est un produit moulé expansé dans le moule contenant une résine oléfinique ayant un point de fusion ou un point de ramollissement non inférieur à 110 °C,
le produit moulé expansé dans le moule (20, 50, 70) comprenant :
une surface de contact (21a) dont au moins une partie est en contact avec un moule dans un état d'achèvement de placement dans lequel le produit moulé expansé dans le moule (20, 50, 70) est placé dans le moule ; et
une saillie d'étanchéité (22, 22A, 22B, 52) qui empêche un polyuréthane liquide introduit dans le moule et une mousse de polyuréthane (30) obtenue à partir du polyuréthane liquide d'entrer entre la surface de contact (21a) et le moule dans l'état d'achèvement de placement, laquelle saillie d'étanchéité (22, 22A, 22B, 52) est moulée à partir d'une mousse et est formée de façon que la facilité de déformation de la saillie d'étanchéité (22, 22A, 22B, 52) en réponse à une force de pressage appliquée lors du contact avec un autre objet, qui est différent de la saillie d'étanchéité (22, 22A, 22B, 52), augmente quand la proximité d'une pointe de la saillie d'étanchéité (22, 22A, 22B, 52) augmente,
lequel produit expansé dans le moule (22, 50, 70) est un produit moulé expansé dans le moule constitué de particules expansées de résine à base de polyoléfine ou de particules expansées d'une résine composite qui contient une résine de polyoléfine et une résine de polystyrène,

2. Produit moulé expansé dans le moule selon la revendication 1, dans lequel la saillie d'étanchéité (22, 22A, 22B, 52) est disposée dans au moins une partie d'une région extérieure de la surface de contact (21a).

3. Produit moulé expansé dans le moule selon la revendication 1 ou 2, dans lequel la saillie d'étanchéité (22, 22A, 22B, 52) est disposée dans une position telle que la saillie d'étanchéité (22, 22A, 22B, 52) soit en contact avec le moule dans l'état d'achèvement de placement.

4. Produit moulé expansé dans le moule selon l'une quelconque des revendications 1 à 3, comprenant en outre :
une sous-saillie qui est disposée à une certaine distance du moule dans l'état d'achèvement de placement.

5. Produit moulé expansé dans le moule selon l'une quelconque des revendications 1 à 4, dans lequel un matériau d'insertion est moulé par insertion.

6. Produit moulé composite expansé comprenant :
le produit moulé expansé dans le moule selon l'une quelconque des revendications 1 à 5 ; et
une mousse de polyuréthane (30),
le produit moulé expansé dans le moule (20, 50, 70) et la mousse de polyuréthane (30) étant moulés solidairement,
le produit moulé expansé dans le moule (20, 50, 70) ayant la surface de contact (21a) qui est exposée.

7. Produit moulé composite expansé selon la revendication 6, lequel produit moulé composite expansé a un point de fusion ou un point de ramollissement non inférieur à 115 °C.

8. Méthode de production d'un produit moulé composite expansé, comprenant les étapes suivantes :
mise d'un produit moulé expansé dans le moule (20, 50, 70) dans un état d'achèvement de placement dans lequel le produit moulé expansé dans le moule (20, 50, 70) est placé dans un moule, dans laquelle le produit moulé expansé dans le moule (20, 50, 70) est un produit moulé expansé dans le moule constitué de particules expansées de résine à base de polyoléfine ou de particules expansées d'une résine composite qui contient une résine de polyoléfine et une résine de polystyrène ;
introduction d'un polyuréthane liquide dans le moule ; et
expansion du polyuréthane liquide pour mouler solidairement une mousse de polyuréthane (30) avec le produit moulé expansé dans le moule (20, 50, 70),
le produit moulé expansé dans le moule (20, 50, 70) étant un produit moulé expansé dans le moule contenant une résine oléfinique ayant un point de fusion ou un point de ramollissement non inférieur à 110 °C,
le produit moulé expansé dans le moule (20, 50, 70) comprenant : une surface de contact (21a) dont au moins une partie est en contact avec un moule dans l'état d'achèvement de placement ; et une saillie d'étanchéité (22, 22A, 22B, 52) qui empêche un polyuréthane liquide introduit dans le moule et une mousse de polyuréthane (30) obtenue à partir du polyuréthane liquide d'entrer entre la surface de contact (21a) et le moule dans l'état d'achèvement de placement, laquelle saillie d'étanchéité (22, 22A, 22B, 52) est moulée à partir d'une mousse et est formée de façon que la facilité de déformation de la saillie d'étanchéité (22, 22A, 22B, 52) en réponse à une force de pressage appliquée lors du contact avec un autre objet, qui est différent de la saillie d'étanchéité (22, 22A, 22B, 52), augmente quand la proximité d'une pointe de la saillie d'étanchéité (22, 22A, 22B, 52) augmente,

9. Méthode selon la revendication 8, dans laquelle le produit moulé expansé dans le moule (20, 50, 70) est un produit moulé expansé dans le moule contenant une résine oléfinique (20, 50, 70) ayant un point de fusion ou un point de ramollissement non inférieur à 115 °C.

10. Méthode selon la revendication 8 ou 9, comprenant en outre l'étape suivante :
fermeture du moule, dans laquelle le moule est pressé contre le produit moulé expansé dans le moule (20, 50, 70) pour presser la saillie d'étanchéité (22, 22A, 22B, 52) en contact avec le moule,

11. Utilisation d'un moule pour mouler solidairement une mousse de polyuréthane (30) avec un produit moulé expansé dans le moule contenant une résine oléfinique (20, 50, 70) ayant un point de fusion ou un point de ramollissement non inférieur à 110 °C,
le produit moulé expansé dans le moule (20, 50, 70) comprenant :
une surface de contact (21a) dont au moins une partie est en contact avec un moule dans un état d'achèvement de placement dans lequel le produit moulé expansé dans le moule (20, 50, 70) est placé dans le moule ; et
une saillie d'étanchéité (22, 22A, 22B, 52) qui empêche un polyuréthane liquide introduit dans le moule et une mousse de polyuréthane (30) obtenue à partir du polyuréthane liquide d'entrer entre la surface de contact (21a) et le moule dans l'état d'achèvement de placement, laquelle saillie d'étanchéité (22, 22A, 22B, 52) est moulée à partir d'une mousse et est formée de façon que la facilité de déformation de la saillie d'étanchéité (22, 22A, 22B, 52) en réponse à une force de pressage appliquée lors du contact avec un autre objet, qui est différent de la saillie d'étanchéité (22, 22A, 22B, 52), augmente quand la proximité d'une pointe de la saillie d'étanchéité (22, 22A, 22B, 52) augmente,
dans laquelle le produit expansé dans le moule (22, 50, 70) est un produit moulé expansé dans le moule constitué de particules expansées de résine à base de polyoléfine ou de particules expansées d'une résine composite qui contient une résine de polyoléfine et une résine de polystyrène,
le moule comprenant :
une saillie de poussée qui amène la saillie d'étanchéité (22, 22A, 22B, 52) à être pressée en contact avec le moule quand la saillie de poussée pousse le produit moulé expansé dans le moule (20, 50, 70) dans l'état d'achèvement de placement vers le moule,
